# EUROPÄISCHE PATENTSCHRIFT

(11) **EP 2 164 164 B1**
(45) Veröffentlichungstag und Bekanntmachung des Hinweises auf die Patenterteilung: **11.01.2012**
(21) Anmeldenummer: 08164022.9
(22) Anmeldetag: 10.09.2008
(51) Int. Cl.: H02P 6/08, H02P 6/10, G05B 13/04

(54) **Verfahren und Steuersystem zum Ansteuern eines bürstenlosen Elektromotors**
Method and control system for controlling a brushless electric motor
Procédé et système de commande destinés au fonctionnement d'un moteur électrique sans balais

(43) Veröffentlichungstag der Anmeldung: 17.03.2010
(73) Patentinhaber: ebm-papst Mulfingen GmbH & Co. KG, 74673 Mulfingen (DE)
(72) Erfinder: Wystup, Ralph, 74653 Künzelsau-Belsenberg (DE); König, Daniel, 74582 Gerabronn (DE); Baun, Martin, 74673 Mulfingen-Eberbach (DE)
(74) Vertreter: Patentanwälte Dr. Solf & Zapf

(56) Entgegenhaltungen:
- JP-A- 10 248 300
- JP-A- 11 089 297
- JP-A- 2000 287 481
- JP-A- 2000 308 205
- US-A1- 2007 296 364

## Beschreibung

Die vorliegende Erfindung betrifft zunächst gemäβ dem Oberbegriff des Anspruchs 1 ein Verfahren zum Ansteuern eines bürstenlosen, elektronisch kommutierten, insbesondere dreisträngigen Elektromotors.

Ferner betrifft die Erfindung auch ein entsprechendes, insbesondere nach dem erfindungsgemäßen Verfahren arbeitendes Steuersystem (Steuerungseinrichtung) gemäβ dem Oberbegriff des Anspruchs 5.

Bei bürstenlosen, elektronisch kommutierten Elektromotoren, so genannten EC-Motoren, ist es bekannt, aus einer Zwischenkreis-Gleichspannung über einen PWMgesteuerten Wechselrichter (PWM = pulse width modulation = Pulsbreitenmodulation) Strangspannungen für Wicklungsstränge des Motors zu generieren, wobei über eine Variation der Taktverhältnisse der PWM-Steuerung auch die Motordrehzahl eingestellt werden kann. Üblicherweise wird die Zwischenkreis-Gleichspannung durch Gleichrichtung einer einphasigen oder häufig dreiphasigen Netzwechselspannung erzeugt, wobei über einen Brückengleichrichter zunächst eine pulsierende, stark wellige Gleichspannung entsteht. Im Falle einer dreiphasigen Netzspannung mit der üblichen Frequenz von 50 Hz pulsiert die gleichgerichtete Spannung mit einer Pulsfrequenz von 300 Hz. Deshalb ist eigentlich eine Glättung über mindestens einen Glättungskondensator und gegebenenfalls eine zusätzliche Siebdrossel erforderlich. Wegen der dazu eigentlich benötigten, relativ großen Kapazität werden normalerweise Elektrolytkondensatoren (Elkos) eingesetzt, diese haben aber im praktischen Einsatz einige Nachteile, und zwar insbesondere ein großes Bauvolumen und eine geringe Lebensdauer.

Deshalb besteht heute die Tendenz, entweder gänzlich auf Glättungskondensatoren oder zumindest auf Elektrolytkondensatoren zu verzichten, wobei im zweiten Fall längerlebige Folienkondensatoren mit geringerer Kapazität eingesetzt werden. Hierbei wird häufig von einem "schlanken Zwischenkreis" gesprochen. Dabei tritt aber der Nachteil auf, dass sich die verbleibende Welligkeit als Störgröße auf das Motordrehmoment überträgt. Ein pulsierendes Drehmoment (Drehmomentwelligkeit) führt aber zu einer starken Geräuschbildung, welche besonders bei Lüfterantrieben sehr störend sein kann.

Um das Drehmoment trotz der mit Störgrößen behafteten, welligen Zwischenkreis-Gleichspannung möglichst konstant zu halten, sind einige Möglichkeiten bekannt.

So kann das Drehmoment durch eine Stromregelung konstant gehalten werden. Nachteilig ist hierbei, dass dazu die Motorströme erfasst werden müssen, und dass eine zu schnelle Stromregelung ein System aus Netzinduktivität und Zwischenkreiskondensator zum Schwingen anregen kann. Die Folge wäre eine noch stärker pulsierende Zwischenkreisspannung.

Die DE 103 32 381 A1 bzw. die korrespondierende EP 1 499 008 A2 betrifft ein Verfahren und ein Steuersystem zur elektronischen Kommutierung eines bürstenlosen Gleichstrommotors, wobei hauptsächlich eine solche Stromregelung beschrieben ist, bei der die Motor-Wicklungsstränge mit bezüglich ihres zeitlichen Verlaufs speziell generierten Wicklungsströmen angesteuert werden, deren Verlaufsform so gewählt und vorgegeben wird, dass ein gleichförmiges (konstantes) Drehmoment entstehen soll. Als eine mögliche Alternative ist in dem Dokument allerdings auch beschrieben, dass die gewünschte Stromform anstatt unter Verwendung eines Stromreglers auch ohne Strommessung durch eine geeignete Modulation der Spannung erzielt werden kann. Der von einer Vollbrücke aus sechs elektronischen Schaltelementen gebildete Wechselrichter wird eingangsseitig auch über einen Gleichspannungszwischenkreis gespeist, aber über eine Störgrößenbehaftung dieser Zwischenkreis-Gleichspannung und deren Einfluss auf das Drehmoment ist in dem Dokument nichts beschrieben.

Es ist weiterhin bekannt (vgl. beispielsweise die Literaturstelle "Verlustarmer Umrichter ohne Zwischenkreis-Kondensator" von B. Piepenbreier und L. Sack in "Elektronik 2006 Nr. 1", Seiten 61 bis 67), in Kombination mit dem Wechselrichter des EC-Motors gesteuerte Gleichrichter einzusetzen. Realisiert wird dies konkret durch spezielle Matrixumrichter mit gesteuerten Gleichrichtern. Der Nachteil dieser - grundsätzlich gut funktionierenden - Anordnung sind Mehrkosten durch die zusätzlichen steuerbaren Halbleiter, welche sich besonders bei großen Stückzahlen sehr bemerkbar machen.

Das Dokument JP 2000-308205 A beschreibt einen elektrischen Fahrzeugmotor, der aus einem einphasigen Netz betrieben wird, wobei im Zwischenkreis ein DC-Filterkondensator zur Glättung der Zwischenkreisspannung vorgesehen ist. Hierbei ist beschrieben, dass die Zwischenkreisspannung mit einem Hochsetzsteller (PWM) erzeugt, geregelt und konstant gehalten werden soll. Dies widerspricht dem Prinzip eines "schlanken Zwischenkreises", weil Hochsetzsteller zwangsläufig Induktivitäten und Kapazitäten zur Energiespeicherung enthalten müssen. Zudem erzeugt ein Hochsetzsteller selbst eine Störgröße, was eine Erfassung und Verarbeitung ohne speicherung ermöglicht.

Die Veröffentlichung JP 10-248300 A beschreibt einen offensichtlich für einen Asynchronmotor vorgesehenen Leistungsumformer (Power Converter), der ebenfalls aus einem einphasigen Netz gespeist wird und einen Glättungskondensator und daher keinen schlanken Zwischenkreis aufweist.

Der vorliegenden Erfindung liegt die Aufgabe zu Grunde, auf eine technisch günstige Weise und mit einfachen und kostengünstig realisierbaren Mitteln einen nachteiligen Einfluss einer mit einer Störgröße behafteten, insbesondere pulsierenden Zwischenkreis-Gleichspannung auf das Motor-Drehmoment und damit auf die Motorgeräusche zu reduzieren, oder idealerweise zu eliminieren.

Erfindungsgemäß wird dies durch ein Verfahren gemäß Anspruch 1 erreicht. Ein zur Anwendung des Verfahrens geeignetes Steuersystem ist Gegenstand des Anspruchs 5. Vorteilhafte Ausgestaltungen der Erfindung sind in den abhängigen Ansprüche enthalten.

Erfindungsgemäß wird demnach eine neuartige, und zwar dynamisch optimierte Störgrößenkompensation durchgeführt. Dabei wird die Störgröße- im speziellen Anwendungsfall die pulsierende Zwischenkreis-Gleichspannung -periodisch erfasst und daraus durch Invertieren bzw. Kehrwertbildung und gegebenenfalls Filtern eine Kompensationsgröße erzeugt und gespeichert, die dann für mindestens eine nachfolgende Periode gemeinsam mit einem üblichen Ausgangssignal des Winkel- und Drehzahlreglers des Steuersystems einem Stellglied der PWM-Steuerung zur Verfügung gestellt wird. Dadurch wird praktisch die Störung durch eine Anpassung der PWM-Taktverhältnisse "ausgeblendet".

Erfindungswesentlich ist hierbei, dass die Kompensationsgröße durch einen Regelkreis derart dynamisch korrigiert wird, dass eine Drehmomentwelligkeit des Elektromotors minimiert wird. Dazu wird das Drehmomentverhalten erfasst, und die Kompensationsgröße wird in Abhängigkeit von dem jeweiligen Drehmomentverhalten derart durch Variation ihrer Phasenlage und/oder ihrer Amplitude (Höhe und/oder Verlauf der Amplitude) modifiziert, dass die Drehmomentwelligkeit auf ein Minimum reduziert oder sogar gänzlich eliminiert wird. In diesem Zusammenhang bedeutet "dynamisch" oder zutreffender "quasi-dynamisch", dass die Korrektur der Kompensationsgröße während des Betriebs des EC-Motors erfolgt, wenn sie notwendig ist. Vorzugsweise werden die beschriebenen Vorgänge zyklisch wiederholt, beispielsweise in jeder Periode oder in bestimmten Perioden.

Die Erfindung basiert auf der Erkenntnis, dass einerseits bei einer "normalen" Störgrößenkompensation ohne die erfindungsgemäße dynamische Korrektur-Regelung die jeweilige Störgröße genau bekannt sein und die Kompensationsgröße dem PWM-Stellglied exakt phasen- und amplitudengenau zum richtigen Zeitpunkt zur Verfügung gestellt werden müsste, dass es andererseits aber in der Praxis zu Verzerrungen in der Amplitude und Phasenlage der Kompensationsgröße kommt. Somit passt eigentlich die Kompensationsgröße nicht mehr zu der eigentlichen Störgröße, so dass auch die Wirkung einer solchen einfachen Störgrößenkompensation auf das Drehmoment nicht optimal sein kann.

Erfindungsgemäß wird nun aber die Auswirkung der jeweiligen Störgrößenkompensation auf das Drehmoment erfasst und periodisch durch Variation der Kompensationsgröße optimiert. Dadurch kann trotz der Störgröße die Drehmomentwelligkeit nahezu eliminiert, zumindest aber deutlich verringert und minimiert werden.

Das erfindungsgemäße Verfahren lässt sich auf eine einfache und wirtschaftliche Weise realisieren. Dazu ist es vorteilhaft, wenn das Drehmomentverhalten sensorlos, d. h. ohne aufwändige Drehmomentsensoren erfasst wird. Dies kann mit Vorteil durch eine Motorstrom-Auswertung und Ermittlung einer Spektralkomponente eines Strom-Raumzeigers erfolgen, wobei erkannt wurde, dass die Amplitude der Spektralkomponente ein Maß für die Drehmomentwelligkeit ist, so dass die Amplitude der Spektralkomponente als Ist-Größe für die jeweilige Drehmomentwelligkeit ausgewertet und durch die dynamisch optimierte Störgrößenkompensation minimiert werden kann. Im Falle einer dreiphasigen Netzwechselspannung mit einer Frequenz von 50 Hz tritt als Grundschwingung der Störgröße eine Spektralkomponente bei 300 Hz auf. Es kann aber auch z. B. eine Oberschwingung zur Optimierung herangezogen werden, indem beide Größen beispielsweise gewichtet verwendet werden.

Ein erfindungsgemäßes Steuersystem besteht zunächst aus den für eine EC-Steuerung üblichen Bestandteilen, und zwar einem Gleichrichter, der eine Netzwechselspannung in eine Zwischenkreis-Gleichspannung gleichrichtet, und einem nachgeschalteten Wechselrichter, der zur Erzeugung von quasi-sinusförmig verlaufenden Motorströmen zur entsprechenden Spannungstaktung (Modulation) von einer PWM-Steuerung angesteuert wird. Erfindungsgemäß weist das Steuersystem ferner eine neuartige Zusatzeinrichtung zur dynamisch optimierten Störgrößenkompensation derart auf, dass eine Drehmomentwelligkeit des Elektromotors minimiert wird.

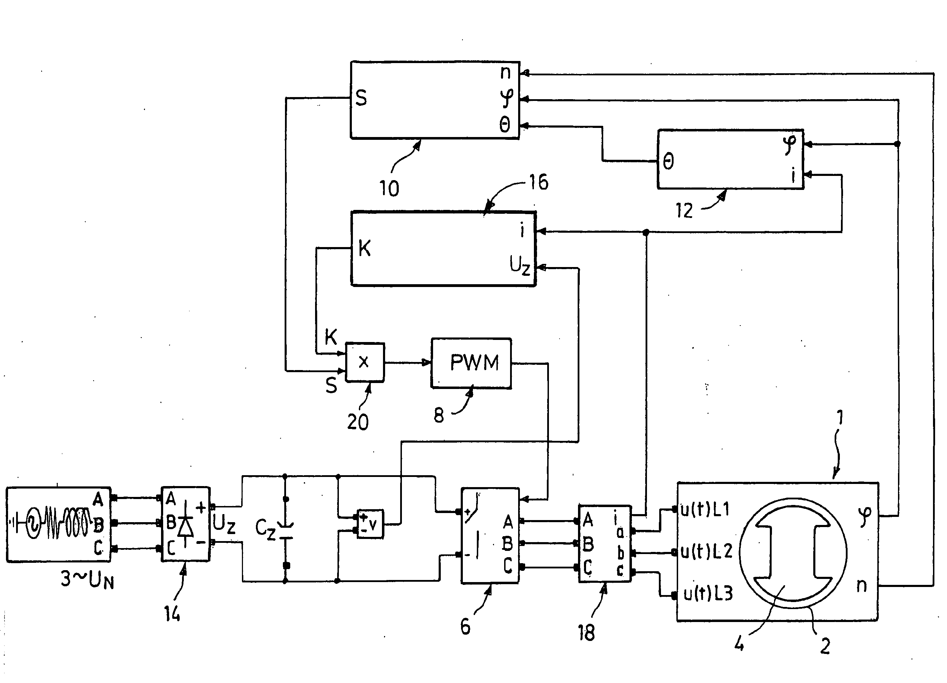

Anhand eines bevorzugten Ausführungsbeispiels soll die Erfindung genauer erläutert werden. Dabei zeigt die einzige Zeichnungsfigur ein vereinfachtes, schematisches Blockschaltbild eines erfindungsgemäßen Steuersystems.

Beispielhaft ist ein dreisträngiger kollektorloser Elektromotor 1 stark schematisch mit seinem Stator 2 und einem permanentmagnetischen Rotor 4 dargestellt. Es kann sich beliebig um einen Innen- oder Außenläufermotor handeln. Der Stator 2 weist drei nicht im Einzelnen dargestellte Wicklungsstränge L1, L2, L3 auf, die wahlweise in Sternschaltung oder Dreieckschaltung angeordnet sein können. Die Wicklungsstränge L1, L2, L3 werden zum Drehantrieb des Rotors 4 zur Erzeugung eines magnetischen Drehfeldes in Abhängigkeit von der Rotorlage (Drehstellung, Winkel ϕ) angesteuert. Dazu ist ein gesteuerter Wechselrichter 6 vorgesehen. Dieser Wechselrichter 6 ist als Brückenendstufe (Vollbrücke) aus sechs gesteuerten Leistungshalbleiterschaltelementen ausgebildet, die zur Kommutierung des Elektromotors und zur Einstellung der Motordrehzahl n von einer PWM-Steuerung 8 so angesteuert werden, dass quasisinusförmige Motor-Strangspannungen u(t) L1, u(t) L2 und u(t) L3 moduliert werden. Diese Art der Motorsteuerung ist bekannt und bedarf keiner genaueren Erläuterungen. Es sei lediglich erwähnt, dass durch eine Rotor-Drehstellungserfassung, die indirekt z. B. über Hallsensoren oder aber vollständig sensorlos erfolgen kann, der jeweilige Rotor-Drehwinkel ϕ ermittelt und zusammen mit der jeweiligen Drehzahl n einem Winkel- und Drehzahlregler 10 zugeführt wird. Zusätzlich wird in einer Berechnungseinheit 12 der Winkel θ zwischen Polradspannung und Strangstrom berechnet und ebenfalls dem Regler 10 zugeführt. Dazu werden der Berechnungseinheit 12 der Winkel ϕ sowie ein Stromwert i zur Berechnung der Nulldurchgänge zugeführt. Der Winkel- und Drehzahlregler 10 ermittelt ein Stellsignal S für die PWM-Steuerung 8.

Der Wechselrichter 6 wird eingangsseitig mit einer Zwischenkreis-Gleichspannung U_{Z} gespeist. Diese Zwischenkreis-Gleichspannung U_{Z} wird aus einer insbesondere dreiphasigen Netzwechselspannung U_{N} über eine Gleichrichterschaltung 14 gewonnen. Bei einer üblichen Netzfrequenz von 50 Hz entsteht somit die Zwischenkreis-Gleichspannung U_{Z} als pulsierende Gleichspannung mit einer Pulsfrequenz von 300 Hz. Üblicherweise wird der Gleichrichterschaltung 10 deshalb zur Glättung ein Zwischenkreiskondensator C_{Z} parallel geschaltet, wobei dieser Zwischenkreiskondensator eigentlich eine relativ große Kapazität von beispielsweise 300 µF aufweisen müsste. Da sich dies aber nur mit einem Elektrolytkondensator realisieren ließe, wird stattdessen ein einfacherer, kleinerer Folienkondensator mit einer Kapazität von beispielsweise nur 30 µF eingesetzt. Deshalb ist die Zwischenkreis-Gleichspannung U_{Z} mit einer pulsierenden Störgröße behaftet.

Erfindungsgemäß wird nun diese Störgröße derart in Abhängigkeit vom Motordrehmoment dynamisch geregelt kompensiert, dass der Einfluss der Störgröße auf das Drehmoment minimiert wird. Im Ergebnis wird hierdurch eine Drehmomentwelligkeit des Elektromotors 1 minimiert.

Dazu weist das erfindungsgemäße Steuersystem eine Zusatzeinrichtung 16 auf, die "hardwaremäßig" als Modul ausgebildet sein kann, insbesondere aber als Software in die bestehende Motor-Regelung implementiert ist. Der Zusatzeinrichtung 16 wird über einen Spannungseingang die mit der Störgröße behaftete Zwischenkreis-Gleichspannung U_{Z} zugeführt. Ferner wird in einer Messeinheit 18 ein Referenzwert i der Strangströme ermittelt, beispielsweise als Summenstrom. Auch dieser Stromwert i wird der Zusatzeinrichtung 16 über einen Stromeingang zugeführt. Die Zusatzeinrichtung 16 erzeugt dann eine dynamisch anhand des Drehmomentverhaltens des Motors 1 korrigierte Kompensationsgröße K, mit der in einem Multiplizierglied 20 die eigentliche Stellgröße S für die PWM-Steuerung 8 beaufschlagt wird, um das Taktverhältnis entsprechend zu modifizieren.

Erfindungsgemäß wird das Drehmomentverhalten sensorlos, ohne Drehmomentsensoren im Motor erfasst. Es kommt dabei nicht auf eine absolute Genauigkeit an, sondern es ist lediglich ein Minimum zu bestimmen. Dazu kann das Drehmoment vorteilhafterweise durch Auswertung von mehreren, d. h. mindestens zwei Motor-Strangströmen bestimmt werden. Alternativ können die Ströme auch über einen so genannten Summenstrom rekonstruiert werden. Zur Korrektur der erfassten und in einem Speicher abgelegten Kompensationsgröße kann diese zeitlich verschoben werden, was einer Korrektur der Phasenlage entspricht. Zusätzlich oder alternativ kann auch der Amplitudenverlauf korrigiert werden. Im einfachsten Fall werden dazu die jeweiligen Amplitudenwerte mit einem Korrekturfaktor multipliziert. Die Drehmomentwelligkeit kann mit Vorteil über die Amplitude einer Spektralkomponente definiert werden. Aufgrund der Pulsfrequenz der Zwischenkreis-Gleichspannung wird im Spektrum des Drehmomentes bei der entsprechenden Frequenz eine Spektralkomponente hervorgerufen. Die Amplitude dieser Spektralkomponente im Drehmoment wird als Ist-Größe für die Regelung der Drehmomentwelligkeit verwendet.

Dazu wird zyklisch die Kompensationsgröße so modifiziert, dass die Amplitude der Spektralkomponente und damit die Drehmomentwelligkeit reduziert und minimiert wird.

Die Spektralkomponente kann entweder durch eine schnelle Fourier-Transformation (FFT) im Frequenzbereich berechnet werden, oder es kann eine Auswertung im Zeitbereich durch Filterung vorzugsweise mit Gleichrichtung und Siebung erfolgen (AM-Detektor).

Die Erfindung ist nicht auf die dargestellten und beschriebenen Ausführungsbeispiele beschränkt, sondern umfasst auch alle im Sinne der Erfindung gleichwirkenden Ausführungen. So ist die Erfindung nicht nur für eine Netzfrequenz von 50 Hz geeignet, sondern arbeitet bei jeder beliebigen Netzfrequenz und auch in einphasigen Systemen, weil auch dabei die Störung periodisch ist. Je nach Netzfrequenz haben dann natürlich auch die Störgrößen und die Grundschwingung der Spektralkomponente entsprechend andere Frequenzen. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Verfahren zum Ansteuern eines bürstenlosen, elektronisch kommutierten, insbesondere dreisträngigen Elektromotors (1), wobei eine dreiphasige Netzwechselspannung (U_{N}) gleichgerichtet und über einen Zwischenkreis als Zwischenkreis-Gleichspannung (U_{Z}) einem Wechselrichter (6) zugeführt wird, der zur Kommutierung des Elektromotors (1) und zur Einstellung der Motordrehzahl über eine bezüglich ihres Taktverhältnisses variierbare PWM-Steuerung (8) so ansteuerbar ist, dass durch Spannungstaktung quasisinusförmige Motorströme entstehen, wobei der Zwischenkreis als schlanker Zwischenkreis ohne Glättungskondensator oder zumindest ohne Elektrolytkondensator ausgebildet ist, so dass die Zwischenkreis-Gleichspannung (U_{Z}) mit einer periodischen Störgröße behaftet ist,
**gekennzeichnet durch** eine dynamisch optimierte Störgrößenkompensation, wobei periodisch die Störgröße erfasst und daraus eine Kompensationsgröße (K) erzeugt wird, mit der die PWM-Steuerung (8) bezüglich ihres Taktverhältnisses beeinflusst wird, wobei die Kompensationsgröße **durch** einen Regelkreis derart dynamisch korrigiert wird, dass eine Drehmomentwelligkeit des Elektromotors (1) minimiert wird, wobei die periodisch pulsierende Störgröße der Zwischenkreis-Gleichspannung (U_{Z}) periodisch **durch** Invertieren bzw. Kehrwertbildung als Kompensationsgröße erzeugt, gespeichert und in mindestens einer nachfolgenden Periode für die Störgrößenkompensation verwendet wird, und wobei das Drehmomentverhalten des Elektromotors (1) erfasst wird, wobei die Kompensationsgröße in Abhängigkeit von dem jeweiligen Drehmomentverhalten derart **durch** Variation ihrer Phasenlage und/oder ihrer Amplituden-Höhe und/oder ihres Amplituden-Verlaufs modifiziert wird, dass die Drehmomentwelligkeit reduziert wird, und wobei das Drehmomentverhalten **durch** eine Motorstrom-Auswertung und Ermittlung einer Spektralkomponente eines Strom-Raumzeigers erfasst wird, deren Amplitude als Ist-Größe für die jeweilige Drehmomentwelligkeit ausgewertet und **durch** die dynamisch optimierte Störgrößenkompensation minimiert wird.

2. Verfahren nach Anspruch 1,
**dadurch gekennzeichnet, dass** die Spektralkomponente bezogen auf eine bestimmte Frequenz durch eine schnelle Fourier-Transformation (FFT) berechnet wird.

3. Verfahren nach Anspruch 1,
**dadurch gekennzeichnet, dass** die Auswertung mittels eines AM-Detektors durch Filterung vorzugsweise mit Gleichrichtung und Siebung erfolgt.

4. Verfahren nach einem der Ansprüche 1 bis 3,
**gekennzeichnet durch** eine Anwendung bei einer dreiphasigen 50 Hz-Netzwechselspannung (U_{N}), wobei die Störgröße der Zwischenkreis-Gleichspannung (U_{Z}) aufgrund des schlanken Zwischenkreises und der fehlenden oder nur geringfügigen kapazitiven Glättung mit 300 Hz pulsiert, so dass im Spektrum des Drehmomentes als Grundschwingung eine 300 Hz-Spektralkomponente auftritt, deren Amplitude als Ist-Wert der Drehmomentwelligkeit verarbeitet wird.

5. Steuersystem für einen bürstenlosen, elektronisch kommutierten Elektromotor (1), insbesondere unter Anwendung des Verfahrens nach einem der vorhergehenden Ansprüche, mit einem Gleichrichter (14) und einem nachgeschalteten schlanken Zwischenkreis ohne Glättungskondensator oder zumindest ohne Elektrolytkondensator, wobei der Gleichrichter (14) eine dreiphasige Netzwechselspannung (U_{N}) in eine mit einer Störgröße behaftete, pulsierende Zwischenkreis-Gleichspannung (U_{Z}) gleichrichtet, und mit einem nachgeschalteten Wechselrichter (6), der zur Erzeugung von quasi-sinusförmig modulierten Motor-Strangspannungen (u(t) L1/L2/L3) von einer PWM-Steuerung (8) angesteuert wird,
**gekennzeichnet durch** eine Zusatzeinrichtung (16) zur dynamisch optimierten Störgrößenkompensation derart, dass eine Drehmomentwelligkeit des Elektromotors (1) minimiert wird, wobei die Zusatzeinrichtung (16) einen Spannungseingang für die mit der Störgröße behaftete Zwischenkreis-Gleichspannung (U_{Z}), einen Stromeingang für mindestens zwei Strangströme (i) oder einen so genannten Summenstrom sowie Mittel zum Erzeugen einer Kompensationsgröße (K) **durch** Invertieren bzw. Kehrwertbildung der Störgröße und Mittel zum Korrigieren der Kompensationsgröße (K) **durch** Variation der Phasenlage und/oder der Amplitude aufweist.

6. Steuersystem nach Anspruch 5,
**dadurch gekennzeichnet, dass** mit der korrigierten Kompensationsgröße (K) in einem Multiplizierglied (20) eine von einem Winkel- und Drehzahlregler (10) erzeugte Stellgröße (S) für die PWM-Steuerung (8) beaufschlagt wird.

## Claims

1. A method for controlling a brushless, electronically commutated, in particular three-phase electric motor (1), with a three-phase a.c. supply voltage (U_{N}) being rectified and supplied via a d.c. link as d.c. link voltage (U_{Z}) to an inverter (6) which can be controlled for commutation of the electric motor (1) and for setting the motor speed via a PWM control (8) which can be varied in terms of its clock ratio such that virtually sinusoidal motor currents are produced by voltage pulsing, the d.c. link being formed as a slimline d.c. link without a smoothing capacitor or at least without an electrolytic capacitor, so that the d.c. link voltage (U_{Z}) has a periodic disturbance,
**characterised by** a dynamically optimised disturbance compensation, with the disturbance being periodically detected and a compensation variable (K) being generated therefrom with which the PWM control (8) is influenced in terms of its clock ratio, the compensation variable being dynamically corrected by a control loop such that a torque ripple of the electric motor (1) is minimised, the periodically pulsing disturbance of the d.c. link voltage (U_{Z}) being generated periodically by inversion or formation of inverse values as compensation variable, being stored and being used in at least one subsequent period for the disturbance compensation, and the torque behaviour of the electric motor (1) being detected, the compensation variable being modified dependent on the respective torque behaviour by variation of its phase relation and/or its amplitude height and/or its amplitude gradient such that the torque ripple is reduced, and the torque behaviour being detected by a motor-current evaluation and determination of a spectral component of a current space vector, the amplitude of which is evaluated as an actual variable for the respective torque ripple and is minimised by the dynamically optimised disturbance compensation.

2. A method according to Claim 1, **characterised in that** the spectral component is calculated relative to a determined frequency by a fast Fourier transform (FFT).

3. A method according to Claim 1, **characterised in that** the evaluation takes place by means of an AM detector by filtering preferably with rectification and filtration.

4. A method according to one of Claims 1 to 3, **characterised by** an application in a three-phase 50 Hz a.c. supply voltage (U_{N}), the disturbance of the d.c. link voltage (U_{Z}), owing to the slimline d.c. link and the lack of or only slight capacitive smoothing, pulsating at 300 Hz, so that a 300-Hz spectral component occurs in the spectrum of the torque as fundamental component, the amplitude of which spectral component is processed as the actual value of the torque ripple.

5. A control system for a brushless, electronically commutated electric motor (1), in particular using the method according to one of the preceding claims, with a rectifier (14) and a subsequent slimline d.c. link without smoothing capacitor or at least without electrolytic capacitor, the rectifier (14) rectifying a three-phase a.c. supply voltage (U_{N}) into a pulsating d.c. link voltage (U_{Z}) having a disturbance, and with a subsequent inverter (6), which is controlled by a PWM control (8) for generating quasi-sinusoidally modulated motor phase voltages (u(t) L1/L2/L3),
**characterised by** a supplementary means (16) for dynamically optimised disturbance compensation such that a torque ripple of the electric motor (1) is minimised, the supplementary means (16) having a voltage input for the d.c. link voltage (U_{Z}) having the disturbance, a current input for at least two phase currents (i) or what is called a summation current, and also means for generating a compensation variable (K) by inversion or formation of inverse values of the disturbance and means for correcting the compensation variable (K) by varying the phase relation and/or the amplitude.

6. A control system according to Claim 5, **characterised in that** a controlled variable (S) for the PWM control (8) which is generated by an angle and speed regulator (10) is acted upon with the corrected compensation variable (K) in a multiplying element (20).

## Revendications

1. Procédé pour actionner un moteur électrique (1) sans balai, à commutation électronique, en particulier à trois phases d'enroulement, selon lequel une tension alternative de réseau (UN) triphasée est redressée et est acheminée via un circuit intermédiaire sous forme de tension continue du circuit intermédiaire (UZ) vers un onduleur (6) qui, pour la commutation du moteur électrique (1) et pour le réglage de la vitesse de rotation du moteur, peut être actionné par une commande MLI (8), variable sur le plan de son rapport de synchronisation, de telle sorte que des courants du moteur quasiment sinusoïdaux se forment sous l'effet de la synchronisation de la tension, ledit circuit intermédiaire étant configuré sous la forme d'un mince circuit intermédiaire sans condensateur de filtrage ou au moins sans condensateur électrolytique, de telle sorte que la tension continue du circuit intermédiaire (U_{Z}) est affectée d'une grandeur de perturbation périodique,
**caractérisé par** une compensation dynamiquement optimisée de la grandeur de perturbation, ladite grandeur de perturbation étant détectée périodiquement et une grandeur de compensation (K) étant générée à partir de celle-ci, avec une influence sur le rapport de synchronisation de la commande MLI (8), la grandeur de compensation étant corrigée par voie dynamique par un circuit de réglage, de manière à minimiser une ondulation du couple du moteur électrique (1), la grandeur de perturbation à impulsion périodique de la tension continue du circuit intermédiaire (U_{Z}) étant générée périodiquement par inversion ou par la formation d'une valeur inverse en tant que grandeur de compensation, étant mémorisée et étant utilisée dans au moins une période consécutive pour la compensation de la grandeur de perturbation, et le comportement du couple du moteur électrique (1) étant détecté, et la grandeur de compensation étant modifiée en fonction du comportement respectif du couple, par la variation de sa longueur de phase et/ou de la valeur de son amplitude et/ou de l'évolution de son amplitude, de manière à réduire l'ondulation du couple, et le comportement de couple étant détecté par l'intermédiaire d'une analyse du courant du moteur et de la détermination d'une composante spectrale d'un indicateur de courant à vecteur spatial, dont l'amplitude est analysée en tant que valeur réelle pour l'ondulation respective du couple et est minimisée par la compensation de la grandeur de perturbation dynamiquement optimisée.

2. Procédé selon la revendication 1, **caractérisé en ce que** la composante spectrale par rapport à une fréquence déterminée est calculée par une transformation rapide de Fourier (FFT).

3. Procédé selon la revendication 1, **caractérisé en ce que** l'analyse est effectuée au moyen d'un détecteur de modulation d'amplitude par filtrage, de préférence avec un redressement et un filtrage.

4. Procédé selon l'une quelconque des revendications 1 à 3, **caractérisé par** une utilisation en présence d'une tension alternative de réseau (UN) triphasée de 50 Hz, la grandeur de perturbation de la tension continue du circuit intermédiaire (UZ) étant pulsée en raison du mince circuit intermédiaire et de l'absence de lissage ou d'un lissage seulement faiblement capacitif avec 300 Hz, de telle sorte que dans le spectre du couple apparaît une composante spectrale de 300 Hz en tant qu'oscillation de base, dont l'amplitude est traitée comme la valeur réelle de l'ondulation du couple.

5. Système de commande pour un moteur électrique (1) sans balai, à commutation électronique, en particulier moyennant l'utilisation du procédé selon l'une quelconque des revendications précédentes, comportant un redresseur (14) et un mince circuit intermédiaire, monté en aval de ce dernier, sans condensateur de filtrage ou au moins sans condensateur électrolytique, ledit redresseur (14) redressant une tension alternative de réseau (UN) triphasée en une tension continue du circuit intermédiaire (UZ) affectée d'une grandeur de perturbation, et comportant un onduleur (6) monté en aval qui, pour générer des tensions par phase d'enroulement (u(t) L1/L2/L3) avec une modulation quasiment sinusoïdale, est actionné par une commande MLI (8),
**caractérisé par** un équipement supplémentaire (16) pour la compensation dynamiquement optimisée de la grandeur de perturbation, de manière à minimiser une ondulation du couple du moteur électrique (1), ledit équipement supplémentaire (16) comportant une entrée de tension pour la tension continue du circuit intermédiaire (UZ) affectée de la grandeur de perturbation, une sortie de courant pour au moins deux courants par phase d'enroulement (i) ou un courant cumulé, ainsi que des moyens pour générer une grandeur de compensation (K) par inversion ou par la formation d'une valeur inverse de la grandeur de perturbation et des moyens pour corriger la grandeur de compensation (K) par la variation de la longueur de phase et/ou de l'amplitude.

6. Système de commande selon la revendication 5, **caractérisé en ce que**, dans un élément de multiplication (20), la grandeur de compensation (K) corrigée est ajoutée à une valeur de réglage (S) pour la commande MLI (8), générée par un régulateur d'angle et de vitesse de rotation (10).
